(19) Europäisches Patentamt
European Patent Office
Office européen des brevets

(11) EP 0 625 995 B1

(12) EUROPÄISCHE PATENTSCHRIFT

(45) Veröffentlichungstag und Bekanntmachung des Hinweises auf die Patenterteilung:
**18.09.1996 Patentblatt 1996/38**

(21) Anmeldenummer: **93917357.1**

(22) Anmeldetag: **30.01.1993**

(51) Int Cl.[6]: **C08F 10/00**, C08F 4/623

(86) Internationale Anmeldenummer:
**PCT/EP93/00211**

(87) Internationale Veröffentlichungsnummer:
**WO 93/16116 (19.08.1993 Gazette 1993/20)**

(54) **KATALYSATORSYSTEME ZUR POLYMERISATION VON C 2- BIS C 10-ALKENEN**
CATALYST SYSTEMS FOR POLYMERISING C 2 TO C 10 ALKENES
SYSTEMES CATALYSEURS POUR LA POLYMERISATION D'ALCENES EN C 2 A C 10

(84) Benannte Vertragsstaaten:
**BE DE ES FR GB NL**

(30) Priorität: **10.02.1992 DE 4203753**

(43) Veröffentlichungstag der Anmeldung:
**30.11.1994 Patentblatt 1994/48**

(73) Patentinhaber: **BASF Aktiengesellschaft**
**67063 Ludwigshafen (DE)**

(72) Erfinder:
- **LANGHAUSER, Franz**
**D-67098 Bad Dürkheim (DE)**
- **LUX, Martin**
**D-6701 Dannstadt-Schauernheim (DE)**
- **MUELHAUPT, Rolf**
**D-7800 Freiburg (DE)**
- **FISCHER, David**
**D-7819 Denzlingen (DE)**

(56) Entgegenhaltungen:
**EP-A- 0 348 126** **WO-A-92/01005**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 625 995 B1

## Beschreibung

Die vorliegende Erfindung betrifft Katalysatorsysteme zur Polymerisation von $C_2$- bis $C_{10}$-Alkenen, enthaltend als aktive Bestandteile Metallocenkomplexe von Metallen der IV. und V. Nebengruppe des Periodensystems, eine oligomere Aluminiumoxidverbindung und eine cyclische Borverbindung der allgemeinen Formel IV

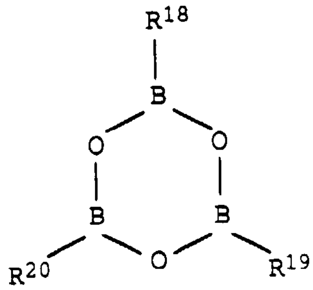

IV

in der die Substituenten folgende Bedeutung haben:

$R^{18}$ bis $R^{20}$ $C_1$- bis $C_{10}$-Alkylgruppen, die ein- bis dreifach durch Halogenatome, $C_6$- bis $C_{15}$-Arylgruppen oder $C_1$- bis $C_{10}$-Alkoxygruppen substituiert sein können;
$C_4$- bis $C_7$-Cycloalkylgruppen, die ein- bis dreifach durch Halogenatome, $C_1$- bis $C_{10}$-Alkylgruppen oder $C_1$- bis $C_{10}$-Alkoxygruppen substituiert sein können;
$C_1$- bis $C_{10}$-Alkoxygruppen, die ein- bis dreifach durch Halogenatome, $C_1$- bis $C_{10}$-Alkylgruppen oder $C_6$- bis $C_1$-Arylgruppen substituiert sein können oder $C_6$- bis $C_{15}$-Arylgruppen, die ein- bis fünffach durch Halogenatome, $C_1$- bis $C_{10}$-Alkylgruppen oder $C_1$- bis $C_{10}$-Alkoxygruppen substituiert sein können.

Weiterhin betrifft die Erfindung die Verwendung derartiger Katalysatorsysteme zur Herstellung von Polyalkenen sowie Verfahren zur Herstellung von Polyalkenen mit Hilfe dieser Katalysatorsysteme.

Für die Polymerisation von Olefinen mit Metallocenkatalysatoren sind hohe Überschüsse an oligomeren Aluminiumoxidverbindungen notwendig, um hohe Produktivitaten der Katalysatorsysteme zu gewahrleisten, wie z.B. aus der EP-A 444 474 bekannt. Hohe Aluminiumüberschüsse führen zu hohen Aluminiumrestgehalten in den Polymerprodukten, was sich bei der Verarbeitung nachteilig auswirken kann, bzw. zu aufwendigen Reinigungsschritten am Polymeren zwingt.

WO 92/01005 und EP-A 348 126 beschreiben die Herstellung von Aluminoxanverbindungen durch Umsetzung von Boroxinen mit Trialkylaluminiumverbindungen. Aus der WO 92/01005 ist auch ein Katalysator zur Polymerisation von Olefinen bekannt, der aus einem Metallocen und den nach dem o.g. Verfahren hergestellten Aluminoxanverbindungen besteht. Die EP-A 348 126 beschreibt weiterhin die Verwendung der nach dem o.g. Verfahren hergestellten Aluminoxanverbindungen als eine Komponente in einem Katalysatorsystem, das aus Metallocen und Aluminoxanverbindungen besteht, und bei der Herstellung von Polyethylen eingesetzt wird.

Der vorliegenden Erfindung lag daher die Aufgabe zugrunde, Katalysatorsysteme zur Verfügung zu stellen, bei denen die Menge an oligomeren Aluminiumoxidverbindungen verringert werden kann, bzw. die bei gleicher Menge an oligomeren Aluminiumoxidverbindungen eine höhere Produktivität aufweisen und somit eine wirtschaftlichere Herstellung von Polyalkenen erlauben.

Demgemäß wurden die eingangs definierten Katalysatorsysteme zur Herstellung von Polyalkenen gefunden. Außerdem wurde die Verwendung derartiger Katalysatorsysteme zur Herstellung von Polyalkenen sowie Verfahren zur Herstellung von Polyalkenen mit Hilfe dieser Katalysatorsysteme gefunden.

Die erfindungsgemäßen Katalysatorsysteme enthalten als aktive Bestandteile u.a. eine oder mehrere Komplexverbindungen von Metallen der IV. und V. Nebengruppe des Periodensystems, insbesondere von Titan, Zirkonium, Hafnium, Vanadium, Niob oder Tantal. Vorzugsweise werden dabei solche Komplexverbindungen verwendet, bei denen das Metallatom über $\pi$-Bindungen mit ungesättigten cyclischen Kohlenwasserstoffresten verbunden ist, beispielsweise Cyclopentadienyl-, Fluorenyl- oder Indenylgruppen. Weiterhin sind die bevorzugt eingesetzten Komplexverbindungen dadurch gekennzeichnet, daß das Metallatom noch mit weiteren Liganden, insbesondere mit Fluor, Chlor, Brom und lod oder einem $C_1$- bis $C_{10}$-Alkyl, beispielsweise einer Methyl-, Ethyl-, Propyl- oder Butylgruppe, verknüpft sein kann. Besonders geeignete Komplexverbindungen enthalten dabei insbesondere Chlor.

Besonders geeignete Komplexverbindungen lassen sich durch folgende allgemeine Formel I kennzeichnen:

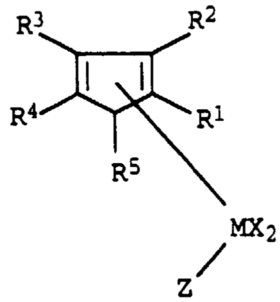

I

in der die Substituenten folgende Bedeutung haben:

| | |
|---|---|
| M | Titan, Zirkonium, Hafnium, Vanadium, Niob oder Tantal, |
| X | Fluor, Chlor, Brom, Iod, Wasserstoff, $C_1$- bis $C_{10}$-Alkyl, $C_6$- bis $C_{15}$-Aryl oder $-OR^6$, |

wobei

| | |
|---|---|
| $R^6$ | $C_1$- bis $C_{10}$-Alkyl, $C_6$- bis $C_{15}$-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeutet, |
| $R^1$ bis $R^5$ | Wasserstoff, $C_1$- bis $C_{10}$-Alkyl, 5- bis 7-gliedriges Cycloalkyl, das seinerseits ein $C_1$- bis $C_6$-Alkyl als Substituent tragen kann, $C_6$- bis $C_{15}$-Aryl oder Arylalkyl, wobei gegebenenfalls auch zwei benachbarte Reste gemeinsam für 4 bis 15 C-Atome aufweisende cyclische Gruppen stehen können, oder $Si(R^7)_3$ mit |
| $R^7$ | $C_1$- bis $C_{10}$-Alkyl, $C_6$- bis $C_1$-Aryl oder $C_3$- bis $C_{10}$-Cycloalkyl, |
| Z | für X oder |

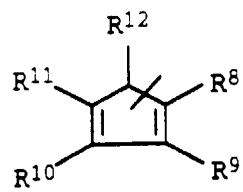

steht,

wobei die Reste

| | |
|---|---|
| $R^8$ bis $R^{12}$ | Wasserstoff, $C_1$- bis $C_{10}$-Alkyl, 5- bis 7-gliedriges Cycloalkyl, das seinerseits ein $C_1$- bis $C_{10}$-Alkyl als Substituent tragen kann, $C_6$- bis $C_{15}$-Aryl oder Arylalkyl bedeuten und wobei gegebenenfalls auch zwei benachbarte Reste gemeinsam für 4 bis 15 C-Atome aufweisende cyclische Gruppen stehen können, oder $Si(R^{13})_3$ mit |
| $R^{13}$ | $C_1$- bis $C_{10}$-Alkyl, $C_6$- bis $C_{15}$-Aryl oder $C_3$- bis $C_{10}$-Cycloalkyl, |

oder wobei die Reste

| | |
|---|---|
| $R^4$ und Z | gemeinsam eine Gruppierung $-[Y(R^{14})_2]_n-E-$ bilden, in der |
| Y | für Silicium, Germanium, Zinn oder Kohlenstoff steht, |
| $R^{14}$ | für $C_1$- bis $C_{10}$-Alkyl, $C_3$- bis $C_{10}$-Cycloalkyl oder $C_6$- bis $C_{10}$-Aryl |
| n | für die Zahlen 1, 2, 3 oder 4 |
| E | für |

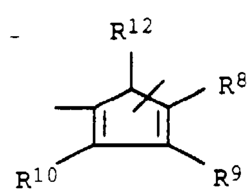

oder A steht, wobei A -O- , -S- , $>NR^{15}$ oder $>PR^{15}$ bedeutet,

mit $R^{15}$ $C_1$- bis $C_{10}$-Alkyl, $C_6$- bis $C_{15}$-Aryl, $C_3$- bis $C_{10}$-Cycloalkyl, Alkylaryl oder $Si(R^{16})_3$

mit $R^{16}$ $C_1$- bis $C_{10}$-Alkyl, $C_6$- bis $C_{15}$-Aryl, $C_3$- bis $C_{10}$-Cycloalkyl oder Alkylaryl.

Von den Metallocenkomplexen der allgemeinen Formel I sind

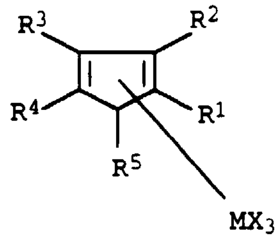

Ia,

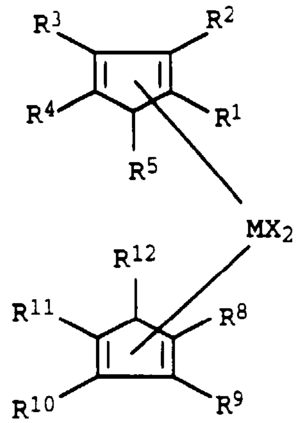

Ib,

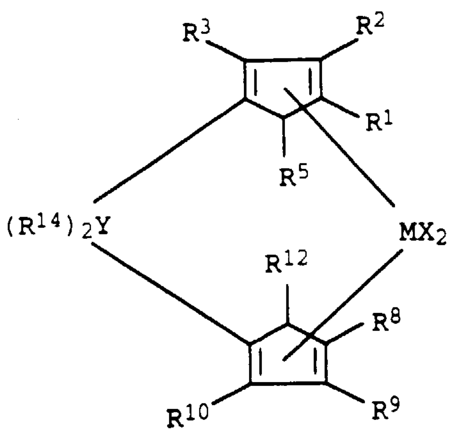

Ic

und

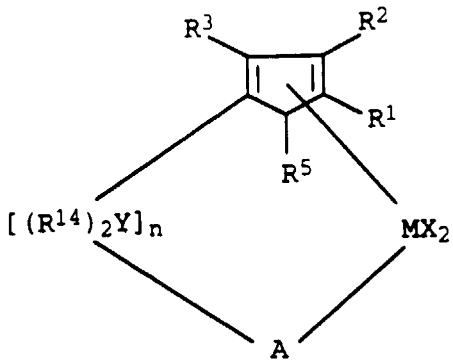

Id

bevorzugt.

Unter der Bezeichnung Metallocene werden also nicht nur die Bis (η-cyclopentadienyl)-Metall-Komplexe verstanden.

Von den Verbindungen der Formel Ia sind insbesondere diejenigen bevorzugt, in denen

| | |
|---|---|
| M | Titan, Zirkonium oder Hafnium, |
| X | Chlor und |
| $R^1$ bis $R^5$ | Wasserstoff oder $C_1$- bis $C_4$-Alkyl bedeuten. |

Von den Verbindungen der Formel Ib sind als bevorzugt diejenigen zu nennen, bei denen

| | |
|---|---|
| M | für Zirkonium oder Hafnium steht, |
| X | für Chlor, $C_1$- bis $C_4$-Alkyl oder Phenyl, |
| $R^1$ bis $R^5$ | Wasserstoff, $C_1$- bis $C_4$-Alkyl oder $Si(R^7)_3$, |
| $R^8$ bis $R^{12}$ | Wasserstoff, $C_1$- bis $C_4$-Alkyl oder $Si(R^{13})_3$ bedeuten. |

Insbesondere sind die Verbindungen der Formel Ib geeignet, in denen die Cyclopentadienylreste gleich sind, bevorzugt sind die unsubstituierten Cyclopentadienylreste.

Beispiele für besonders geeignete Verbindungen sind u.a.:

Bis(cyclopentadienyl)zirkoniumdichlorid,
Bis(pentamethylcyclopentadienyl)-zirkoniumdichlorid,
Bis(cyclopentadienyl)-diphenylzirkonium,
Bis(methylcyclopentadienyl)-zirkoniumdichlorid,
Bis(ethylcyclopentadienyl)-zirkoniumdichlorid,
Bis(n-butylcyclopentadienyl)-zirkoniumdichlorid und
Bis(trimethylsilylcyclopentadienyl)-zirkoniumdichlorid sowie die entsprechenden Dimethylzirkoniumverbindungen.

Von den Verbindungen der Formel Ic sind diejenigen besonders geeignet, in denen

| | |
|---|---|
| $R^1$ und $R^8$ | gleich sind und für Wasserstoff oder $C_1$- bis $C_{10}$-Alkylgruppen stehen, |
| $R^5$ und $R^{12}$ | gleich sind und für Wasserstoff, eine Methyl-, Ethyl-, iso-Propyl- oder tert.-Butylgruppe stehen |
| $R^2$, $R^3$, $R^9$ und $R^{10}$ | die Bedeutung<br>$R^3$ und $R^{10}$ $C_1$- bis $C_4$-Alkyl<br>$R^2$ und $R^9$ Wasserstoff<br>haben oder zwei benachbarte Reste $R^2$ und $R^3$ sowie $R^9$ und $R^{10}$ gemeinsam für 4 bis 12 C-Atome aufweisende cyclische Gruppen stehen, |
| $R^{14}$ | für $C_1$- bis $C_8$-Alkyl, |
| M | für Zirkonium oder Hafnium, |
| Y | für Silicium, Germanium, Zinn oder Kohlenstoff und |
| X | für Chlor stehen. |

Beispiele für besonders geeignete Komplexverbindungen sind u.a.

Dimethylsilandiylbis(cyclopentadienyl)-zirkoniumdichlorid,

Dimethylsilandiylbis(indenyl)-zirkoniumdichlorid,
Dimethylsilandiylbis(tetrahydroindenyl)-zirkoniumdichlorid,
Ethylenbis(cyclopentadienyl)-zirkoniumdichlorid,
Ethylenbis(indenyl)-zirkoniumdichlorid,
Ethylenbis(tetrahydroindenyl)-zirkoniumdichlorid,
Tetramethylethylen-9-fluorenylcyclopentadienylzirkoniumdichlorid,
Dimethylsilandiylbis(-3-tert.butyl-5-methylcyclopentadienyl)-zirkoniumdichlorid,
Dimethylsilandiylbis(-3-tert.butyl-5-ethylcyclopentadienyl)-zirkoniumdichlorid,
Dimethylsilandiylbis(-3-tert.butyl-5-methylcyclopentadienyl)-dimethylzirkonium,
Dimethylsilandiylbis(-2-methylindenyl)-zirkoniumdichlorid,
Dimethylsilandiylbis(-2-isopropylindenyl)-zirkoniumdichlorid,
Dimethylsilandiylbis(-2-tert.butylindenyl)-zirkoniumdichlorid,
Diethylsilandiylbis(-2-methylindenyl)-zirkoniumdibromid,
Dimethylsilandiylbis(-2-methyl-5-methylcyclopentadienyl)-zirkoniumdichlorid,
Dimethylsilandiylbis(-2-ethyl-5-isopropylcyclopentadienyl)-zirkoniumdichlorid,
Dimethylsilandiylbis(-2-methylindenyl)-zirkoniumdichlorid,
Dimethylsilandiylbis(-2-methylbenzindenyl)-zirkoniumdichlorid und
Dimethylsilandiylbis(-2-methylindenyl)-hafniumdichlorid.

Bei den Verbindungen der allgemeinen Formel Id sind als besonders geeignet diejenigen zu nennen, in denen

M für Zirkonium oder Hafnium,
X für Chlor oder $C_1$- bis $C_{10}$-Alkyl stehen,
Y für Silicium oder Kohlenstoff steht, wenn n = 1 ist oder für Kohlenstoff, wenn n = 2 ist
$R^{14}$ für $C_1$- bis $C_8$-Alkyl, $C_5$- und $C_6$-Cycloalkyl oder $C_6$- bis $C_{10}$-Aryl,
A für -O- , -S- , $>NR^{15}$

und

$R^1$ bis $R^3$ und $R^5$ für Wasserstoff, $C_1$- bis $C_{10}$-Alkyl, $C_3$- bis $C_{10}$-cycloalkyl, $C_6$- bis $C_{15}$-Aryl oder $Si(R^7)_3$ stehen, oder wobei zwei benachbarte Reste für 4 bis 12 C-Atome aufweisende cyclische Gruppen stehen.

Die Synthese derartiger Komplexverbindungen kann nach an sich bekannten Methoden erfolgen, wobei die Umsetzung der entsprechend substituierten, cyclischen Kohlenwasserstoffanionen mit Halogeniden von Titan, Zirkonium, Hafnium, Vanadium, Niob oder Tantal, bevorzugt ist.

Beispiele für entsprechende Herstellungsverfahren sind u.a. im Journal of Organometallic Chemistry, 369 (1989), 359-370 beschrieben.

Als Metallocenkomplex kann auch μ-Oxo-bis-(chlorobiscyclopentadienyl)zirkonium verwendet werden.

Neben den Metallocenkomplexen enthalten die erfindungsgemäßen Katalysatorsysteme noch oligomere Aluminiumoxidverbindungen.

Geeignet sind beispielsweise offenkettige oder cyclische Alumoxanverbindungen der allgemeinen Formel II oder III

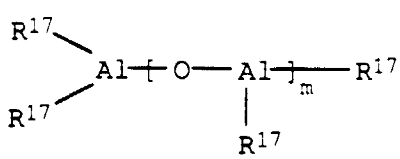

II

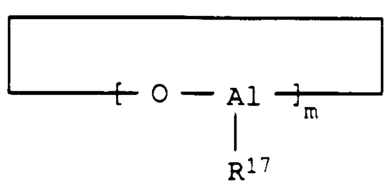

III

wobei

$R^{17}$ eine $C_1$- bis $C_4$-Alkylgruppe bedeutet, bevorzugt Methyl- oder Ethylgruppe und m für eine ganze Zahl von 5 bis

30, bevorzugt 10 bis 25 steht.

Die Herstellung dieser oligomeren Alumoxanverbindungen erfolgt üblicherweise durch Umsetzung einer Lösung von Trialkylaluminium mit Wasser und ist u.a. in der EP-A 284 708 und der US-A 4,794,096 beschrieben.

In der Regel liegen die dabei erhaltenen oligomeren Alumoxanverbindungen als Gemische unterschiedlich langer, sowohl linearer als auch cyclischer Kettenmoleküle vor, so daß m als Mittelwert anzusehen ist. Die Alumoxanverbindungen können auch im Gemisch mit anderen Metallalkylen, bevorzugt mit Aluminiumalkylen vorliegen.

Darüberhinaus enthalten die erfindungsgemäßen Katalysatorsysteme noch cyclische Borverbindungen der allgemeinen Formel IV

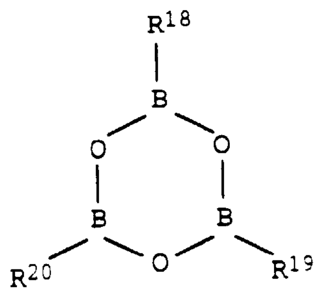

IV

in der die Substituenten $R^{18}$ bis $R^{20}$ folgende Bedeutung haben:
verzweigte oder vorzugsweise lineare $C_1$- bis $C_{10}$-Alkylgruppen, bevorzugt lineare $C_1$- bis $C_4$-Alkylgruppen, insbesondere Methyl- und Ethylgruppen, die ein- bis dreifach durch Halogenatome, insbesondere Fluor und Chlor, $C_6$- bis $C_{15}$-Arylgruppen, vorzugsweise Phenylgruppen oder $C_1$- bis $C_{10}$-Alkoxygruppen, vorzugsweise $C_1$- bis $C_4$-Alkoxygruppen substituiert sein können; $C_4$- bis $C_7$-Cycloalkylgruppen, bevorzugt $C_5$- bis $C_6$-Cycloalkylgruppen, die ein- bis dreifach durch Halogenatome, insbesondere Fluor und Chlor, verzweigte oder vorzugsweise lineare $C_1$- bis $C_{10}$-Alkylgruppen, bevorzugt $C_1$- bis $C_4$-Alkylgruppen oder verzweigte oder vorzugsweise lineare Alkoxygruppen mit 1 bis 10 C-Atomen, insbesondere mit 1 bis 4 C-Atomen substituiert sein können; verzweigte oder vorzugsweise lineare Alkoxygruppen mit 1 bis 10 C-Atomen, bevorzugt mit 1 bis 4 C-Atomen, die ein- bis dreifach durch Halogenatome, insbesondere Fluor und Chlor, verzweigte oder vorzugsweise lineare $C_1$- bis $C_{10}$-Alkylgruppen, bevorzugt $C_1$- bis $C_4$-Alkylgruppen oder $C_6$- bis $C_{15}$-Arylgruppen, vorzugsweise Phenylgruppen substituiert sein können; $C_6$- bis $C_{15}$-Arylgruppen, bevorzugt Phenyl, die ein- bis fünffach durch Halogenatome, bevorzugt Fluor und Chlor, verzweigte oder vorzugsweise lineare $C_1$- bis $C_{10}$-Alkylgruppen, insbesondere $C_1$- bis $C_4$-Alkylgruppen oder verzweigte oder vorzugsweise lineare Alkoxygruppen mit 1 bis 10 C-Atomen, insbesondere mit 1 bis 4 C-Atomen substituiert sein können.

Als besonders geeignet haben sich Verbindungen der allgemeinen Formel IV erwiesen, in denen alle drei Reste $R^{18}$, $R^{19}$ und $R^{20}$ die gleiche Bedeutung haben.

Bevorzugt sind jeweils die unsubstituierten Verbindungen, insbesondere stehen $R^{18}$ bis $R^{20}$ für unsubstituierte lineare $C_1$- bis $C_4$-Alkyl- oder $C_6$- bis $C_{10}$-Arylgruppen. Besonders bevorzugt sind Triethylboroxin und Trimethylboroxin.

Die Herstellung cyclischer Borverbindungen der allgemeinen Formel IV ist dem Fachmann an sich bekannt und kann z.B. durch Umsetzung von Boroxid mit Trialkylboranen erfolgen, wie beispielsweise aus der US-A 5 001 244 bekannt.

Mischungen verschiedener cyclischer Borverbindungen der allgemeinen Formel IV können ebenfalls eingesetzt werden.

Es hat sich als vorteilhaft erwiesen, wenn das atomare Verhältnis zwischen Aluminium aus der oligomeren Aluminiumoxidverbindung und dem Metall der IV. und V. Nebengruppe des Periodensystems aus dem Metallocenkomplex im Bereich von 10:1 bis $10^6$:1, bevorzugt im Bereich von 10:1 bis $10^4$:1 liegt.

Das atomare Verhältnis zwischen Bor aus der cyclischen Borverbindung der allgemeinen Formel IV und dem Aluminium aus der oligomeren Aluminiumoxidverbindung kann im Bereich von $10^{-4}$:1 bis 1:1, bevorzugt im Bereich von $10^{-2}$:1 bis 1:1, insbesondere im Bereich von 0,05:1 bis 0,2:1 liegen.

Die drei Bestandteile der erfindungsgemaßen Katalysatorsysteme können in beliebiger Reihenfolge einzeln oder als Gemische in den Polymerisationsreaktor eingebracht werden.

Mit Hilfe dieser Katalysatorsysteme lassen sich Polymerisate von Alkenen herstellen. Darunter werden Homo- und Copolymerisate von $C_2$- bis $C_{10}$-Alkenen, bevorzugt $C_2$- bis $C_{10}$-Alk-1-enen verstanden, wobei als Monomere vorzugsweise Ethylen, Propylen, But-1-en, Pent-1-en und Hex-1-en verwendet werden.

Die Herstellung dieser Polymerisate kann in den üblichen, für die Polymerisation von Alkenen verwendeten Reaktoren entweder diskontinuierlich oder bevorzugt kontinuierlich durchgeführt werden. Geeignete Reaktoren sind u.a. kontinuierlich betriebene Rührkessel, wobei man gegebenenfalls auch eine Reihe von mehreren hintereinander geschalteten Rührkesseln verwenden kann.

In einer bevorzugten Ausführungsform wird zunächst die oligomere Alumoxanverbindung, bevorzugt als Lösung in einem inerten Lösungsmittel, beispielsweise in Benzol, Toluol, Hexan, Heptan oder deren Mischungen vorgelegt und auf Temperaturen von 20°C bis 100°C erwärmt. Anschließend werden die Alkene zugegeben und dann wird die Polymerisation durch Zugabe einer Mischung aus der Komplexverbindung von Metallen der IV. und V. Nebengruppe des Periodensystems und der cyclischen Borverbindung, die bevorzugt auch in einem inerten Lösungsmittel gelöst sind, insbesondere in demjenigen, in dem die oligomere Alumoxanverbindung gelöst ist, gestartet.

Die Polymerisationsbedingungen sind an sich unkritisch, Drücke von 0,5 bis 3000 bar, bevorzugt 1 bis 80 bar und Temperaturen von -50 bis +300°C, bevorzugt -20 bis 100°C sind üblich.

Polymerisationsreaktionen mit Hilfe der erfindungsgemäßen Katalysatorsysteme lassen sich in der Gasphase, in einer Suspension, in flüssigen Monomeren und in inerten Lösungsmitteln durchführen. Bei der Polymerisation in Lösungsmitteln werden insbesondere flüssige Kohlenwasserstoffe wie Benzol oder Toluol verwendet. Polymerisate mit guten anwendungstechnischen Eigenschaften können auch bei der Polymerisation in der Gasphase, in einer Suspension und in flüssigen Monomeren erhalten werden.

Die erfindungsgemaßen Katalysatorsysteme weisen eine sehr hohe Produktivität auf, die mit Hilfe der erfindungsgemäßen Katalysatorsysteme hergestellten Polymerisate zeichnen sich durch einen niedrigen Gehalt an Katalysatorrückständen und eine enge Molekulargewichtsverteilung aus.

Beispiele

Herstellung von Polypropylen (PP)

Beispiel 1

In einem 2 l Glasautoklaven wurden 600 ml trockenes Toluol und 1,74 g (≙ 30 mmol Al) Methylalumoxan als 30 gew.-%ige Lösung in Toluol vorgelegt, auf 40°C erwärmt und Propylen bis zu einem Gesamtdruck von 2 bar eingeleitet. Die Polymerisation wurde durch Zugabe von 1,26 mg (≙ 0,003 mmol) rac.-Ethylenbis-(1-indenyl)zirkoniumdichlorid und 188 mg (1,5 mmol) Trimethylboroxin in 15 ml Toluol gestartet. Temperatur und Druck wurden konstant bei 40°C und 2 bar gehalten. Nach einer Reaktionszeit von 3 Stunden wurde die Polymerisation durch Entspannen des Reaktors beendet und das Produkt mit einer Mischung aus 1,5 l Methanol und 15 ml konz. HCl versetzt. Das entstandene Polymer wurde mit Methanol gewaschen D und im Vakuum getrocknet.

Beispiel 2

Es wurde analog zu Beispiel 1 gearbeitet, jedoch wurden 600 ml 5 trockenes Toluol und 0,87 g (15 mmol Al) Methylalumoxan als 30 gew.-%ige Lösung in Toluol vorgelegt. Die Polymerisation wurde durch Zugabe von 8,77 mg (≙ 0,03 mmol) Bis(cyclopentadienyl)zirkoniumdichlorid und 94 mg (≙ 0,75 mmol) Trimethylboroxin in 15 ml Toluol gestartet.

Vergleichsbeispiele V1 und V2

Es wurde wir in den Beispielen 1 und 2 gearbeitet, jedoch ohne Zusatz von Trimethylboroxin.

Die Ausbeuten und die Eigenschaften der Polypropylene sind in der Tabelle zusammengestellt.

Die Staudinger-Indices [η] wurden bei 135°C in Dekalin bestimmt, der Gewichtsmittelwert $\overline{M}_w$ und der Zahlenmittelwert $\overline{M}_n$ im Beispiel 1 und Vergleichsbeispiel 1 durch Gelpermeationschromatographie, der Zahlenmittelwert $\overline{M}_n$ im Beispiel 2 und Vergleichsbeispiel 2 durch Endgruppenbestimmung mittels $^{13}$C-NMR und der Schmelzpunkt $T_m$ durch DSC (Differential-Scanning-Calorimetry)-Messungen.

Tabelle

| Beispiele | atomares Verhältnis zwischen Al aus Methylalumoxan und Zr aus Komplexverbindung | atomares Verhältnis zwischen Bor aus Trimethylboroxin und Al aus Methylalumoxan | PP | Ausbeute [g] | [η] [dl/g] | $\overline{M}_w$ [g/mol] | $\overline{M}_n$ [g/mol] | $\overline{M}_w/\overline{M}_n$ | $T_m$ [°C] |
|---|---|---|---|---|---|---|---|---|---|
| 1 | $10^4$:1 | 0,15:1 | isotaktisch | 144 | 0,40 | 41700 | 23200 | 1,8 | 135 |
| 2 | 500:1 | 0,15:1 | ataktisch | 205 | - | - | 500 | - | - |
| V1 | $10^4$:1 | - | isotaktisch | 46 | 0,36 | 36400 | 21400 | 1,7 | 133 |
| V2 | 500:1 | - | ataktisch | 68 | - | - | 280 | - | - |

**Patentansprüche**

**1.** Katalysatorsysteme zur Polymerisation von $C_2$- bis $C_{10}$-Alkenen, enthaltend als aktive Bestandteile Metallocenkomplexe von Metallen der IV. und V. Nebengruppe des Periodensystems, eine oligomere Aluminiumoxidverbindung und eine cyclische Borverbindung der allgemeinen Formel IV

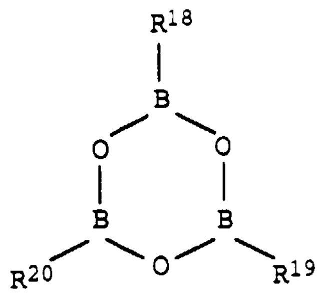

IV

in der die Substituenten folgende Bedeutung haben:

$R^{18}$ bis $R^{20}$ $C_1$- bis $C_{10}$-Alkylgruppen, die ein- bis dreifach durch Halogenatome, $C_6$- bis $C_{15}$-Arylgruppen oder $C_1$- bis $C_{10}$-Alkoxygruppen substituiert sein können;
$C_4$- bis $C_7$-Cycloalkylgruppen, die ein- bis dreifach durch Halogenatome, $C_1$- bis $C_{10}$-Alkylgruppen oder $C_1$- bis $C_{10}$-Alkoxygruppen substituiert sein können;
$C_1$- bis $C_{10}$-Alkoxygruppen, die ein- bis dreifach durch Halogenatome, $C_1$- bis $C_{10}$-Alkylgruppen oder $C_6$- bis $C_{15}$-Arylgruppen substituiert sein können oder $C_6$- bis $C_{15}$-Arylgruppen, die ein- bis fünffach durch Halogenatome, $C_1$- bis $C_{10}$-Alkylgruppen oder $C_1$- bis $C_{10}$-Alkoxygruppen substituiert sein können.

**2.** Katalysatorsysteme nach Anspruch 1, dadurch gekennzeichnet, daß das atomare Verhaltnis zwischen Aluminium aus der oligomeren Aluminiumoxidverbindung und dem Metall der IV. und V. Nebengruppe des Periodensystems aus dem Metallocenkomplex im Bereich von 10:1 bis $10^6$:1 liegt.

**3.** Katalysatorsysteme nach den Ansprüchen 1 bis 2, dadurch gekennzeichnet, daß das atomare Verhältnis zwischen Bor aus der cyclischen Borverbindung der allgemeinen Formel IV und dem Aluminium aus der oligomeren Aluminiumoxidverbindung im Bereich von $10^{-4}$:1 bis 1:1 liegt.

**4.** Katalysatorsysteme nach den Ansprüchen 1 bis 3, dadurch gekennzeichnet, daß als Metallocenkomplex von Metallen der IV. und V. Nebengruppe des Periodensystems ein Metallocenkomplex der allgemeinen Formel I

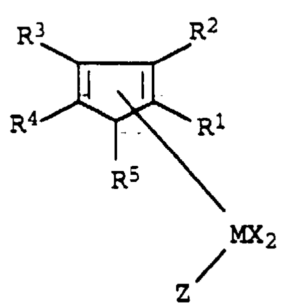

I

in der die Substituenten folgende Bedeutung haben:

M Titan, Zirkonium, Hafnium, Vanadium, Niob oder Tantal,
X Fluor, Chlor, Brom, Iod, Wasserstoff, $C_1$- bis $C_{10}$-Alkyl, $C_6$- bis $C_{15}$-Aryl oder -$OR^6$,

wobei

$R^6$ $C_1$- bis $C_{10}$-Alkyl, $C_6$- bis $C_{15}$-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeutet,

| | |
|---|---|
| $R^1$ bis $R^5$ | Wasserstoff, $C_1$- bis $C_{10}$-Alkyl, 5- bis 7-gliedriges Cycloalkyl, das seinerseits ein $C_1$- bis $C_{10}$-Alkyl als Substituent tragen kann, $C_6$- bis $C_{15}$-Aryl oder Arylalkyl, wobei gegebenenfalls auch zwei benachbarte Reste gemeinsam für 4 bis 15 C-Atome aufweisende cyclische Gruppen stehen können, oder $Si(R^7)_3$ mit |
| $R^7$ | $C_1$- bis $C_{10}$-Alkyl, $C_6$- bis $C_{15}$-Aryl oder $C_3$- bis $C_{10}$-Cycloalkyl, |
| Z | für X oder |

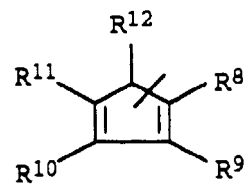

steht,

wobei die Reste

| | |
|---|---|
| $R^8$ bis $R^{12}$ | Wasserstoff, $C_1$- bis $C_{10}$-Alkyl, 5- bis 7-gliedriges Cycloalkyl, das seinerseits ein $C_1$- bis $C_{10}$-Alkyl als Substituent tragen kann, $C_6$- bis $C_1$-Aryl oder Arylalkyl bedeuten und wobei gegebenenfalls auch zwei benachbarte Reste gemeinsam für 4 bis 15 C-Atome aufweisende cyclische Gruppen stehen können, oder $Si(R^{13})_3$ mit |
| $R^{13}$ | $C_1$- bis $C_{10}$-Alkyl, $C_6$- bis $C_{15}$-Aryl oder $C_3$- bis $C_{10}$-Cycloalkyl, |

oder wobei die Reste

| | |
|---|---|
| $R^4$ und Z | gemeinsam eine Gruppierung $-[Y(R^{14})_2]_n$-E- bilden, in der |
| Y | für Silicium, Germanium, Zinn oder Kohlenstoff steht, |
| $R^{14}$ | für $C_1$- bis $C_{10}$-Alkyl, $C_3$- bis $C_{10}$-Cycloalkyl oder $C_6$- bis $C_{15}$-Aryl |
| n | für die Zahlen 1, 2, 3 oder 4 |
| E | für |

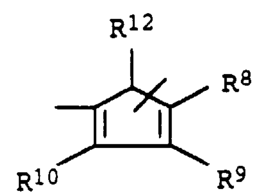

| | |
|---|---|
| | oder A steht, wobei A -O-, -S-, $>NR^{15}$ oder $>PR^{15}$ bedeutet, |
| mit $R^{15}$ | $C_1$- bis $C_{10}$-Alkyl, $C_6$- bis $C_{15}$-Aryl, $C_3$- bis $C_{10}$-Cycloalkyl, Alkylaryl oder $Si(R^{16})_3$ |
| mit $R^{16}$ | $C_1$- bis $C_{10}$-Alkyl, $C_6$- bis $C_{15}$-Aryl, $C_3$- bis $C_{10}$-Cycloalkyl oder Alkylaryl |

eingesetzt wird und als oligomere Aluminiumoxidverbindung eine offenkettige oder cyclische Alumoxanverbindung der allgemeinen Formel II oder III

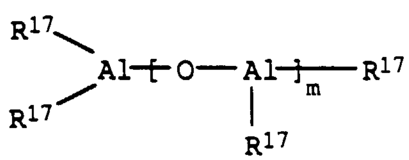

II

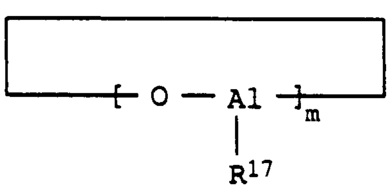

III

wobei

$R^{17}$ eine $C_1$- bis $C_4$-Alkylgruppe bedeutet und m für eine ganze Zahl von 5 bis 30 steht.

**5.** Verwendung der Katalysatorsysteme gemäß den Ansprüchen 1 bis 4 zur Herstellung von Polyalkenen.

**6.** Verfahren zur Herstellung von Polymerisaten von $C_2$- bis $C_{10}$-Alkenen bei Drücken von 0,5 bis 3000 bar und Temperaturen von -50 bis +300°C mit Hilfe eines Katalysatorsystems, dadurch gekennzeichnet, daß man Katalysatorsysteme gemäß den Ansprüchen 1 bis 4 verwendet.

## Claims

**1.** A catalyst system for the polymerization of $C_2$-$C_{10}$-alkenes, containing, as active components, a metallocene complex of metals of the subgroups IV and V of the Periodic Table, an oligomeric alumina compound and a cyclic boron compound of the formula IV

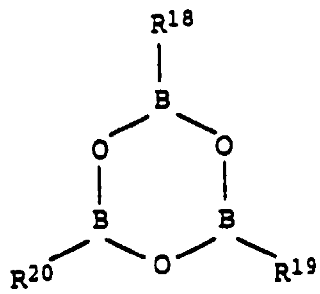

IV

where
$R^{18}$ to $R^{20}$ are each $C_1$-$C_{10}$-alkyl which may be monosubstituted to trisubstituted by halogen, $C_6$-$C_{15}$-aryl or $C_1$-$C_{10}$-alkoxy,
$C_4$-$C_7$-cycloalkyl which may be monosubstituted to trisubstituted by halogen, $C_1$-$C_{10}$-alkyl or $C_1$-$C_{10}$-alkoxy,
$C_1$-$C_{10}$-alkoxy which may be monosubstituted to trisubstituted by halogen, $C_1$-$C_{10}$-alkyl or $C_6$-$C_{15}$-aryl, or $C_6$-$C_{15}$-aryl which may be monosubstituted to pentasubstituted by halogen, $C_1$-$C_{10}$-alkyl or $C_1$-$C_{10}$-alkoxy.

**2.** A catalyst system as claimed in claim 1, wherein the atomic ratio of aluminum from the oligomeric alumina compound to the metal of subgroup IV or V of the Periodic Table from the metallocene complex is from 10 : 1 to $10^6$ : 1.

**3.** A catalyst system as claimed in claim 1 or 2, wherein the atomic ratio of boron from the cyclic boron compound of the formula IV to aluminum from the oligomeric alumina compound is from $10^{-4}$ : 1 to 1 : 1.

**4.** A catalyst system as claimed in any of claims 1 to 3, wherein a metallocene complex of the formula I

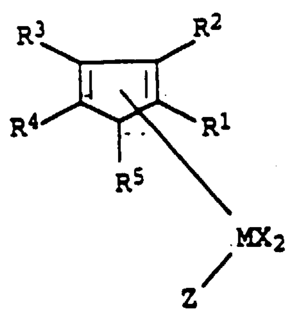

I

where

M is titanium, zirconium, hafnium, vanadium, niobium or tantalum,
X is fluorine, chlorine, bromine, iodine, hydrogen, $C_1$-$C_{10}$-alkyl, $C_6$-$C_{15}$-aryl or $-OR^6$,
$R^6$ is $C_1$-$C_{10}$-alkyl, $C_6$-$C_{15}$-aryl, alkylaryl, arylalkyl, fluoroalkyl or fluoroaryl, where each alkyl radical is of 1 to 10 carbon atoms and each aryl radical is of 6 to 20 carbon atoms,
$R^1$ to $R^5$ are each hydrogen, $C_1$-$C_{10}$-alkyl, 5-membered to 7-membered cycloalkyl which in turn may carry $C_1$-

$C_{10}$-alkyl as a substituent, $C_6$-$C_{15}$-aryl or arylalkyl, where two adjacent radicals together may furthermore form a cyclic group of 4 to 15 carbon atoms, or $Si(R^7)_3$,
$R^7$ is $C_1$-$C_{10}$-alkyl, $C_6$-$C_{15}$-aryl or $C_3$-$C_{10}$-cycloalkyl,
Z is X or

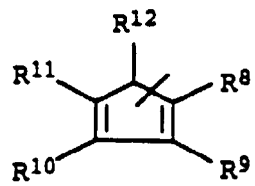

$R^8$ to $R^{12}$ are each hydrogen, $C_1$-$C_{10}$-alkyl, 5-membered to 7-membered cycloalkyl which in turn may carry $C_1$-$C_{10}$-alkyl as a substituent, $C_6$-$C_{15}$-aryl or arylalkyl, and two adjacent radicals together may furthermore form a cyclic group of 4 to 15 carbon atoms, or $Si(R^{13})_3$,
$R^{13}$ is $C_1$-$C_{10}$-alkyl, $C_6$-$C_{15}$-aryl or $C_3$-$C_{10}$-cycloalkyl, or $R^4$ and Z together form a group $-[Y(R^{14})_2]_n$-E-,
Y is silicon, germanium, tin or carbon,
$R^{14}$ is $C_1$-$C_{10}$-alkyl, $C_3$-$C_{10}$-cycloalkyl or $C_6$-$C_{15}$-aryl,
n is 1, 2, 3 or 4,
E is

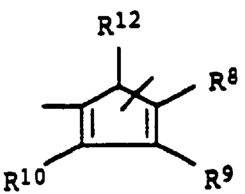

or A, A is -O-, -S-, $>NR^{15}$ or $>PR^{15}$,
$R^{15}$ is $C_1$-$C_{10}$-alkyl, $C_6$-$C_{15}$-aryl, $C_3$-$C_{10}$-cycloalkyl, alkylaryl or $Si(R^{16})_3$ and
$R^{16}$ is $C_1$-$C_{10}$-alkyl, $C_6$-$C_{15}$-aryl, $C_3$-$C_{10}$-cylcoalkyl or alkylaryl,

is used as the metallocene complex of the metal of subgroup IV or V of the Periodic Table and an open-chain or cyclic alumoxane compound of the formula II or III

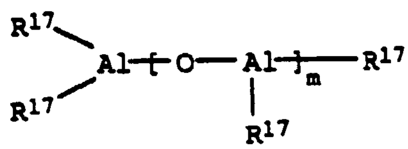

II

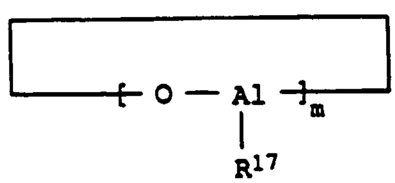

III

where $R^{17}$ is $C_1$-$C_4$-alkyl and m is an integer of from 5 to 30, is used as the oligomeric alumina compound.

**5.** Use of the catalyst system as claimed in any of claims 1 to 4 for the preparation of polyalkenes.

**6.** A process for the preparation of a polymer of $C_2$-$C_{10}$-alkenes at from 0.5 to 3000 bar and from -50 to +300°C with the aid of a catalyst system, wherein the catalyst system as claimed in any of claims 1 to 4 is used.

## Revendications

**1.** Systèmes catalyseurs pour la polymérisation d'alcènes en $C_2$-$C_{10}$, contenant, comme constituants actifs, des complexes de type métallocène de métaux des groupes IVB et VB de la classification périodique des éléments, un

composé oligomère d'oxyde d'aluminium et un composé cyclique du bore de formule générale IV

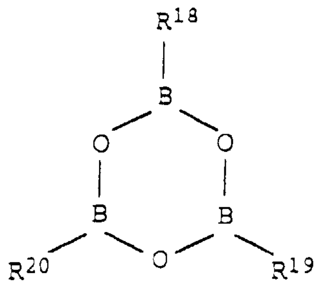

IV

dans laquelle les substituants ont les significations suivantes:

| | |
|---|---|
| $R^{18}$ à $R^{20}$ | Groupements alkyle en $C_1$-$C_{10}$ qui peuvent être substitués une à trois fois par des atomes d'halogène, des groupements aryle en $C_6$-$C_{15}$ ou des groupements alcoxy en $C_1$-$C_{10}$;<br>Groupements cycloalkyle en $C_4$-$C_7$ qui peuvent être substitués une à trois fois par des atomes d'halogène, des groupements alkyle en $C_1$-$C_{10}$ ou des groupements alcoxy en $C_1$-$C_{10}$;<br>Groupements alcoxy en $C_1$-$C_{10}$ qui peuvent être substitués une à trois fois par des atomes d'halogène, des groupements alkyle en $C_1$-$C_{10}$; ou<br>Groupements aryle en $C_6$-$C_{15}$ qui peuvent être substitués une à cinq fois par des atomes d'halogène, des groupements alkyle en $C_1$-$C_{10}$ ou des groupements alcoxy en $C_1$-$C_{10}$. |

2. Systèmes catalyseurs selon la revendication 1, caractérisés en ce que le rapport atomique entre l'aluminium du composé oligomère d'oxyde d'aluminium et le métal des groupes IVB et VB de la classification périodique du complexe de type métallocéne se situe dans la gamme de 10:1 à $10^6$:1.

3. Systèmes catalyseurs selon la revendication 1 ou 2, caractérisés en ce que le rapport atomique entre le bore du composé cyclique du bore de formule générale IV et l'aluminium du composé oligomère d'oxyde d'aluminium se situe dans la gamme de $10^{-4}$:1 à 1:1.

4. Systèmes catalyseurs selon l'une quelconque des revendications 1 à 3, caractérisés en ce que l'on utilise, comme complexe de type métallocéne de métaux des groupes IVB et VB de la classification périodique des éléments, un complexe de type métallocéne de formule générale I

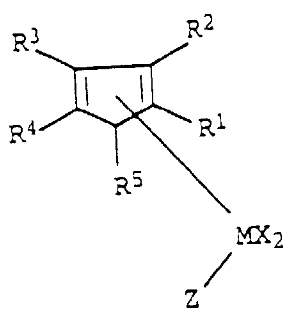

I

dans laquelle les substituants ont les significations suivantes:

| | |
|---|---|
| M | Atome de titane, de zirconium, de hafnium, de vanadium, de niobium ou de tantale; |
| X | Atome de fluor, de chlore, de brome, d'iode, d'hydrogène ou groupement alkyle en $C_1$-$C_{10}$, aryle en $C_6$-$C_{15}$ ou $-OR^6$,<br>$R^6$ représentant un groupement alkyle en $C_1$-$C_{10}$, aryle en $C_6$-$C_{15}$, alkylaryle, arylalkyle, fluoroalkyle ou fluoroaryle contenant chaque fois 1 à 10 atomes de carbone dans le reste alkyle et 6 à 20 atomes de carbone dans le reste aryle, |
| $R^1$ à $R^5$ | Atomes d'hydrogène, groupements alkyle en $C_1C_{10}$, cycloalkyle à 5-7 chaînons qui peuvent porter à leur tour un groupement alkyle en $C_1$-$C_{10}$ en tant que substituant, aryle en $C_6$-$C_{15}$ ou arylalkyle, deux restes voisins pouvant éventuellement être aussi mis ensemble pour des groupements cycliques renfermant de 4 à 15 atomes de carbone, ou $Si(R^7)_3$ avec<br>$R^7$ = groupement alkyle en $C_1$-$C_{10}$, aryle en $C_6$-$C_{15}$ ou cycloalkyle en $C_3$-$C_{10}$, |

Z est mis pour X ou pour

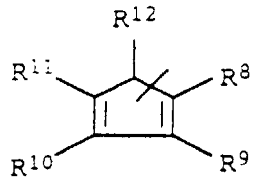

les restes $R^8$ à $R^{12}$ représentant des atomes d'hydrogène, des groupements alkyle en $C_1$-$C_{10}$, cycloalkyle à 5-7 chaînons qui peuvent porter de leur côté un groupement alkyle en $C_1$-$C_{10}$ en tant que substituant, aryle en $C_6$-$C_{15}$ ou arylalkyle, deux restes voisins pouvant éventuellement être aussi mis ensemble pour des groupements cycliques renfermant de 4 à 15 atomes de carbone, ou $Si(R^{13})_3$ avec

$R^{13}$ = groupement alkyle en $C_1$-$C_{10}$, aryle en $C_6$-$C_{15}$ ou cycloalkyle en $C_3$-$C_{10}$,

ou bien

les restes $R^4$ et Z forment ensemble un groupement $-[Y(R^{14})_2]_n$-E-, dans lequel

Y est mis pour un atome de silicium, de germanium, d'étain ou de carbone,
$R^{14}$ est mis pour un groupement alkyle en $C_1$-$C_{10}$, cycloalkyle en $C_3$-$C_{10}$ ou aryle en $C_6$-$C_{15}$,
n est mis pour un nombre 1, 2, 3 ou 4,
E est mis pour

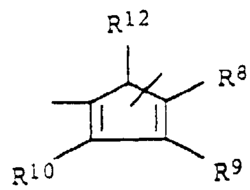

ou A,
A représentant -O-, -S-, $>NR^{15}$ ou $>PR^{15}$, avec $R^{15}$ = groupement alkyle en $C_1$-$C_{10}$, aryle en $C_6$-$C_{15}$, cycloalkyle en $C_3$-$C_{10}$, alkylaryle ou $Si(R^{16})_3$,
avec $R^{16}$ = groupement alkyle en $C_1$-$C_{10}$, aryle en $C_6$-$C_{15}$, cycloalkyle en $C_3$-$C_{10}$ ou alkylaryle,

et l'on utilise, comme composé oligomère d'oxyde d'aluminium, un composé de type alumoxanne en chaîne ouverte ou cyclique de formule générale II ou III

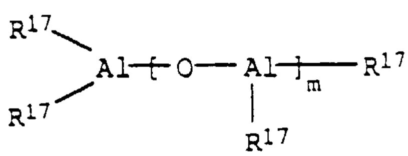

II

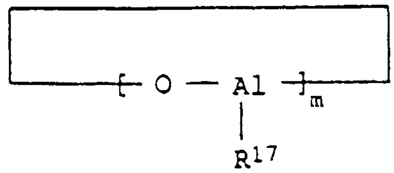

III

dans laquelle $R^{17}$ représente un groupement alkyle en $C_1$-$C_4$ et m est mis pour un nombre entier de 5 à 30.

**5.** Utilisation des systèmes catalyseurs selon l'une quelconque des revendications 1 à 4 pour la préparation de polyalcènes.

6. Procédé de préparation de polymères d'alcènes en $C_2$-$C_{10}$ sous des pressions de 0,5 à 3000 bar et à des températures de -50 à +300°C à l'aide d'un système catalyseur, caractérisé en ce que l'on utilise des systèmes catalyseurs selon l'une quelconque des revendications 1 à 4.